# EUROPÄISCHE PATENTSCHRIFT

(11) **EP 3 596 789 B1**
(45) Veröffentlichungstag und Bekanntmachung des Hinweises auf die Patenterteilung: **29.12.2021**
(21) Anmeldenummer: 18712845.9
(22) Anmeldetag: 15.03.2018
(51) Int. Cl.: H02G 3/20

(54) **PLAN MIT DER DECKE ABSCHLIESSENDE BAUFASSUNG FÜR PROVISORISCHE UND PERMANENTE BELEUCHTUNGSKÖRPER**
CEILING-FLUSH-MOUNTED STRUCTURAL HOLDER FOR TEMPORARY AND PERMANENT LIGHT FITTINGS
DOUILLE PROVISOIRE À ENCASTREMENT PLAN DANS LE PLAFOND POUR UN APPAREIL D'ÉCLAIRAGE PROVISOIRE ET PERMANENT

(30) Priorität: 15.03.2017 DE 102017002504
(43) Veröffentlichungstag der Anmeldung: 22.01.2020
(73) Patentinhaber: Hencken, Claus, 40591 Düsseldorf (DE)
(72) Erfinder: Hencken, Claus, 40591 Düsseldorf (DE)
(74) Vertreter: Eisenführ Speiser
(86) Internationale Anmeldenummer: PCT/EP2018/056605
(87) Internationale Veröffentlichungsnummer: WO 2018/167243

(56) Entgegenhaltungen:
- EP-A2- 1 467 456
- WO-A1-86/03277
- DE-U1-202015 001 170

## Beschreibung

Die vorliegende Erfindung betrifft eine Basiseinheit für eine plan mit der Decke oder der Wand abschließende Baufassung für provisorische und permanente Beleuchtungskörper bzw. Leuchten etc.

### HINTERGRUND DER ERFINDUNG - ZU LÖSENDES PROBLEM

Beleuchtungskörper, die an der ebenen Oberfläche einer Decke oder Wand angebracht werden können, existieren seit vielen Jahren. Diese Leuchten umfassen typischerweise eine Montageplatte, die direkt an der Wand oder der Decke montiert ist, einen Gewindebefestigungspfosten oder -nippel, der sich von der Montageplatte erstreckt, eine Überdachung oder eine andere dekorative Platte, die auf der Montageplatte durch den Montagepfosten montierbar ist, eine Gewindemutter, die auf dem Montagepfosten aufgenommen ist, und eine Lichtbaugruppe, die mit dem Baldachin verbunden ist. Die Leuchtenanordnung kann eine oder mehrere Lichtsteckdosen und dekorative Arme, Gehäuse, Ummantelungen, Befestigungsketten und dergleichen umfassen. Die elektrischen Buchsen sind mit einem länglichen elektrischen Kabel verbunden, das mit einer elektrischen Stromleitung verbunden ist, die neben der Montageplatte angeordnet ist.

Beispielsweise wird in der Patentveröffentlichung US 2003/0193810 A1 eine Leuchte beschrieben, die eine Anschlussdose, eine ringförmige Montageplatte, eine Kappe, eine Kragenschlaufe, eine Überwurfmutter und eine Leuchtenanordnung mit einer elektrischen Schnur einer gewissen Länge umfasst. Die Kappe umfasst eine äußere Schale und eine zentrale Wickelspule, die konzentrisch innerhalb der äußeren Hülle der Kappe und konzentrisch um eine Montageöffnung innerhalb der Kappe montiert ist. Die zentrale Aufwickelspule hat einen im Allgemeinen zylindrischen mittleren Abschnitt und einen ringförmigen Flanschabschnitt, der sich von der Oberseite des zentralen Abschnitts erstreckt. Der lose Abschnitt der elektrischen Schnur kann um die Aufwickelspule herumgewickelt sein, um sie in einer sicheren und effizienten Weise zu verstauen.

Die DE 20 2015 001 170 U1, die EP 1 467 456 A2 und die WO 86/03277 A1 offenbaren technische Lösungen, die jeweils für den Einsatz als Baufassungen verbesserbar sind.

Weiterhin beschreibt beispielsweise die Patentveröffentlichung US 2011/0048793 A1 eine Deckenaufhängungsanordnung zum Aufhängen eines Gegenstands mit einem Kabel, einer Schnur oder einer Leine an einer Decke, umfassend einen Deckenbeschlag, eine Abdeckung oder ein Gehäuse und eine Aufhängungsvorrichtung. Die Aufhängevorrichtung ist angepasst, um an der Decke befestigt zu werden, wie beispielsweise an einem Haken, Ring oder Bügel. Die Aufhängevorrichtung und der Deckenbeschlag, die Abdeckung oder das Gehäuse haben zusammenwirkende Gewinde, die es ermöglichen, dass sie miteinander verschraubt werden und dadurch verschiedene vertikale Positionen in Bezug aufeinander einnehmen. Die Aufhängungsvorrichtung kann einen vorstehenden länglichen Abschnitt umfassen, der sich nach unten erstreckt, einen axialen Kanal zur Aufnahme des Kabels, einer Schnur oder Leine und ein Außengewinde aufweist; Der Deckenbeschlag, die Abdeckung oder das Gehäuse kann einen Abschnitt mit einem Durchgangsloch mit einem Innengewinde zum Zusammenwirken mit dem Außengewinde des vorstehenden länglichen Abschnitts umfassen, um dem Deckenbeschlag, der Abdeckung oder dem Gehäuse eine gewünschte Position zu geben, beispielsweise in engem Zusammenspiel mit der Decke. Die Deckenabdeckung, das Gehäuse oder der Beschlag können aus zwei getrennten Teilen bestehen, von denen eines an seiner Unterseite eine große Öffnung aufweist, in die ein Verbindungsstecker eingeführt werden kann, und der andere Teil kann entlang einer axialen Ebene geteilt sein.

Bei der Fertigstellung des Innenbaus von Neubauten werden vielfach einfache Lampenfassungen mit Anschlussdrähten, sog. "Baupendel bzw. Baufassungen", über zweipolige Lüsterklemmen an die Deckenkabelanschlussdrähte für zukünftige Beleuchtungskörper angeklemmt. Baufassungen werden im Handel, z.B. in Baumärkten, in der Regel auch als "Renovierfassung" oder "Lampenfassung" oder dergleichen bezeichnet.

In diese Baupendel bzw. Baufassungen werden Leuchtmittel eingeschraubt um Fertigstellungsarbeiten, wie Tapezier- und Malerarbeit, mit geeigneter Beleuchtung durchzuführen bzw. genügend Licht für Besichtigungen oder die erste Übergangszeit des neuen Bewohners bereitzustellen.

Üblicherweise werden nach Abschluss der Innenarbeiten die Baupendel bzw. Baufassungen wieder entfernt und es bleibt den Nutzern überlassen, dort ihre Lampen fachkundig anzubringen.

Die hierbei verwendeten Baupendel bzw. Baufassungen haben nur eine provisorische Zugentlastung und dürfen nur einzelne Leuchtmittel tragen. Derartige Provisorien wirken optisch unschön, bergen bei überlangen Anschlussdrähten an den Kabelauslässen eine erhöhte Unfallgefahr und sind nicht für den Dauereinsatz geeignet.

### AUFGABE DER ERFINDUNG

Es ist die Aufgabe der vorliegenden Erfindung, die Anbringung von Baufassungen zu vereinfachen und/oder so auszuführen, dass diese keine Unfallgefahr in sich bergen, gefällig aussehen, plan an Decke oder Wand anliegen, als Lampen dauerhaft belassen werden können und mittels einer Basiseinheit für die Montage dekorativer Lampen genutzt werden können.

### ZUSAMMENFASSUNG DER ERFINDUNGSGEMÄßEN LÖSUNG

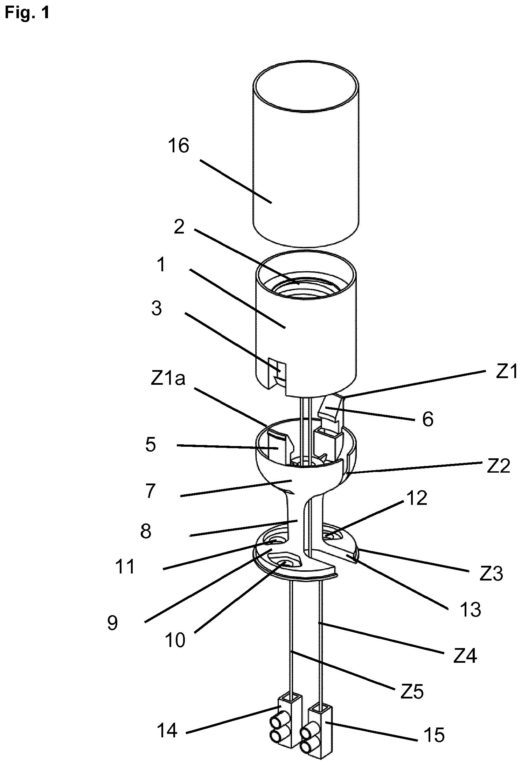

Die vorliegende Erfindung betrifft eine weiter unten genauer beschriebene Basiseinheit für eine neuartige, taillierte und modulare Baufassung, umfassend einen Sockel (7) oder eine Sockelplatte (7a), der oder die mit Aussparungen versehen ist und in einer Ausführungsform durch Rasthaken (5) und (6) mit einer Fassung (1), d.h. eine Leuchtmittelfassung (1) verbunden werden kann oder verbunden ist, welche zusammen mit einer Dekohülse, z.B. 16 oder 16a, die neuartige Baufassung ergibt. Die Dekohülsen können vielfältig gestaltet sein, beispielsweise wie in Fig. 1 gezeigt als Zylinder, gewünschtenfalls auch konisch gestaltet sein oder alternativ als ein Baldachin (22). Die Baufassung kann anfangs, wie eine übliche Baufassung mit Zugentlastung pendelnd befestigt werden. Später kann die Baufassung, ohne die Stromverbindungen trennen zu müssen, aufgrund der Aussparungen, der getrennten Kabel und der vorgesehenen einzelnen

Kabelklemmen, beispielsweise Klemmverbinder oder Lüsterklemmen, an Wand oder Decke befestigt, alle Stromleitungen, insbesondere eng, um den Arm (8) einer Basiseinheit (7-9), die eine aus einen Sockel (7) oder einer

Sockelplatte (7a), dem Arm (8) und einem Befestigungsschild (9) gebildete Einheit bildet, umschlungen und durch eine Dekohülse optisch verdeckt gesichert werden.

Die Lösung der Aufgabe erfolgt erfindungsgemäß bevorzugt dadurch, dass eine neuartige, taillierte und modulare Baufassung, umfassend einen Sockel (7) oder einer Sockelplatte (7a), mit Aussparungen und weiteren Details versehen wurde und z.B. durch Rasthaken mit einer Leuchtmittelfassung verbunden wurde, welche allein oder zusammen mit der Dekohülse die neuartige Baufassung ergeben. Die erfindungsgemäße Lösung der Aufgabe ist insbesondere auch in den Zeichnungen Fig. 1 bis Fig. 20 ersichtlich, sowie auch aus den Ansprüchen und beispielhaften Ausführungsformen 1 bis 5. Die hier im Rahmen der Beschreibung der Erfindung verwendeten Begriffe werden in der dem Fachmann geläufigen Bedeutung verwendet.

Die Erfindung betrifft hierbei insbesondere die in den Ansprüchen angegebene Baufassung, die plan mit einer Decke oder Wand abschließt und zur provisorischen oder permanenten Befestigung von Beleuchtungskörpern dient. Der erfindungsgemäß verwendete Begriff "Baufassung" steht hierbei auch für solche Begriffe oder ist synonym zu diesen Begriffen, die im Handel, z.B. in Baumärkten, für Baufassungen gebräuchlich sind, z.B. "Renovierfassung", "Lampenfassung" oder dergleichen. Baufassungen bzw. Renovierfassungen, Lampenfassungen oder dergleichen dienen zur Aufnahme eines (elektrischen) Leuchtmittels. Leuchtmittel sind alle elektrischen Betriebsmittel und elektrischen Verbraucher, die dazu dienen, Licht zu erzeugen, sowie alle Gegenstände, die durch chemische oder physikalische Vorgänge Licht erzeugen. Leuchtmittel bilden somit eine Lichtquelle. Solche Leuchtmittel können vielfältiger Art sein, z.B. Glühbirnen, Neonröhren, LEDs und dergleichen. Der Begriff Leuchtmittel, wie er in der vorliegenden Erfindung verwendet wird, ist präziser als der früher verwendete Begriff "Lampen", mit dem früher sowohl Leuchtmittel als fallweise auch Leuchten bezeichnet wurden, und der Begriff Leuchtmittel bezeichnet somit immer nur die lichterzeugenden Komponente(n) von Leuchten. Der Begriff "Beleuchtungskörper" wie dieser im Rahmen der vorliegenden Erfindung verwendet, ist synonym zum Begriff "Leuchte", insbesondere z.B. im fest montiertem Zustand, und umfasst auch Leuchten, sofern diese z.B. eine Dekohülse oder einen Baldachin umfassen, und die dann als "dekorative Leuchten" bezeichnet werden.

Diese Baufassung kann anfangs, wie eine übliche Baufassung mit Zugentlastung pendelnd befestigt werden um Restarbeiten an Decke oder Wand ausführen zu können. Der Begriff "Zugentlastung" bezeichnet im Rahmen der Erfindung eine mechanische Schutzvorrichtung für flexible elektrische Leitungen. Zugentlastungen müssen bei ortsveränderlichen elektrischen Betriebsmitteln vorhanden sein, die Zugfestigkeit ist - abhängig von der Masse der Geräte - in vielen Ländern durch spezielle Sicherheitsvorschriften vorgeschrieben. Zugentlastungen sind oft Metall- oder Kunststoffschellen, die flexible elektrische Anschlusskabel (Litzenleitungen) vor dem Herausreißen schützen. Die Kabel werden dazu eingeklemmt. Auch Kabelverschraubungen können eine Zugentlastungsfunktion haben. In erfindungsgemäß bevorzugten Ausführungen der erfindungsgemäß bevorzugten Baufassung kann somit eine Zugentlastung vorgesehen bzw. vorhanden sein. Dies gilt auch dann, wenn in Figuren oder Figurenbeschreibungen eine solche Zugentlastung nicht eigens erwähnt ist. Im Rahmen der Erfindung können auch die in dem unten beschriebenen Befestigungsschild (9) vorgesehenen Bohrungen (10) bis (12) als Zugentlastung dienen, indem die Baufassung über eine der genannten Bohrungen z.B. in einen in der Decke oder Wand angebrachten Haken direkt oder ggf. über ein Band oder dergleichen aufgehängt wird, oder über einen in die Decke oder Wand eingebrachten Dübel über eine, ggf. auch lockere (d.h. nur zum Teil eingeschraubte) Schraubverbindung fixiert wird.

Später kann die Baufassung, ohne die Stromverbindungen trennen zu müssen, aufgrund der Aussparungen, um den Kabelmantel herum, plan an der Decke befestigt werden und alle Stromleitungen, aufgrund der getrennten Kabel mit z.B. einzelnen Kabelklemmen oder Lüsterklemmen, insbesondere eng, um den Arm umschlungen, z.B. durch eine Dekohülse optisch verdeckt und durch die Einrastung gesichert werden.

Diese Baufassung verfügt in einer Ausführungsform am Sockel über Löcher für eine spätere Verschraubung an Wand oder Raumdecke oder in einer alternativen Ausführungsform lässt sie sich gewünschtenfalls auch über eine Klebefläche ohne Hilfsmittel an einer Oberfläche befestigen. Der Sockel kann aufgrund seiner Aussparungen jederzeit, ohne Lösen der Kabelverbindungen, ausgetauscht werden.

Nach einer zugentlastenden Befestigung, zum Beispiel über eine Verschraubung, kann die Baufassung in eine feste Leuchte umgewandelt werden. Alternativ kann der Endnutzer der Räumlichkeiten die Baufassung mittels dekorativer Leuchteinheiten aufwerten.

### BESCHREIBUNG ANHAND DER ZEICHNUNG

Die Erfindung wird nachfolgend anhand der Zeichnungen Fig. 1 bis Fig. 8 näher erläutert:
Figur 1:
   Fig. 1 zeigt in einer Explosionszeichnung die Fassung (1), auch als Leuchtmittelfassung (1) bezeichnet, mit Ihrem Gewinde (2) für die Leuchtmittel und die Verrastungsöffnung (3), wobei die gegenüberliegende Verrastungsöffnung (4) nicht sichtbar ist, für die Rasthaken (5) und (6) mit Ihren flexiblen Überständen (Z1) und (Z1a). Weiterhin wird in Fig. 1 eine aus einem Sockel (7), einem Arm (8) und einem Befestigungsschild (9) gebildete Einheit gezeigt. Die aus Sockel (7), Arm (8) und Befestigungsschild (9) gebildete Einheit wird im Rahmen dieser Erfindung auch als "Basiseinheit (7-9)" bezeichnet.
   Die Rasthaken (5) und (6) verbinden den Sockel (7) mit der Leuchtmittelfassung (1), wobei dann die Basiseinheit (7-9), gebildet aus Sockel (7) mit seinem Arm (8) zur Distanzhaltung gegenüber dem Befestigungsschild (9) mit seinen Bohrungen (10) bis (12), mit Nut (Z3) und Aussparungen (13) und (Z2), zur Befestigung an einer Wand oder Raumdecke dienen.
   Die einzeln angesetzten Lüsterklemmen (14) und (15) an den Anschlusskabeln (Z4) und (Z5) dienen zum Anschluss an bauseits vorhandene Stromzuführungen. Die Dekohülse (16) kann, auch nach der Montage, über die erfindungsgemäß bevorzugte Baufassung geschoben werden. Die Dekohülse (16) wird dabei durch die flexiblen Überstände (Z1) und (Z1a) der Rasthaken (5) und (6) bzw. durch die Nut (Z3) im Befestigungsschild (9) fixiert.
   Begriff "flexibel" bzw. "flexiblen Überstände" und dergleichen bedeutet im Rahmen der Erfindung, dass die Überstände über die Rasthaken (5) und (6) federnd gelagert sind.
   Die Dekohülse (16) kann dekorativ ausgeführt und mit einer Schutzfolie ausgestattet sein, die erst nach Abschluss der Malerarbeiten entfernt wird. Die Dekohülsen können vielfältig gestaltet sein, beispielsweise wie in Fig. 1 gezeigt als Zylinder, gewünschtenfalls auch konisch gestaltet sein oder alternativ als ein Baldachin (22).
Figur 2:

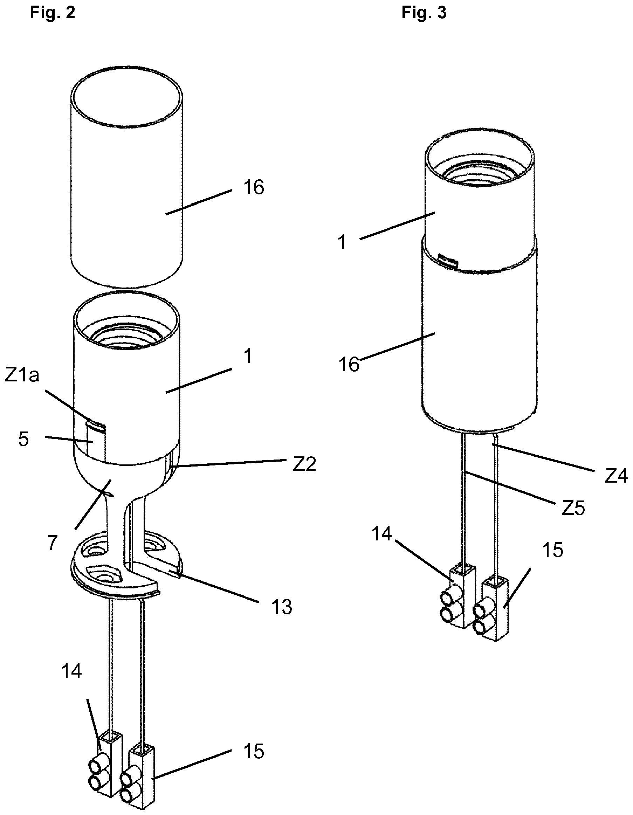

   Fig. 2 zeigt die Dekohülse (16), die mit dem Sockel (7) verbundene Leuchtmittelfassung (1), die Lüsterklemmen (14) und (15), den Überstand (Z1a), wobei der gegenüberliegende Überstand (Z1) nicht sichtbar ist, den sichtbaren Teil Ratshaken (5) und die Aussparung (13) im Befestigungsschild (9) und die Aussparung (Z2) im Sockel (7). Fig. 2 zeigt somit eine Leuchtmittelfassung (1), die über die Rasthaken (5) und (6), wobei Rasthaken (6) hier nicht sichtbar ist, und über die nach Einrasten verdeckten Verrastungsöffnungen (3) und (4) mit der aus dem Sockel (7), dem Arm (8) und dem Befestigungsschild (9) gebildeten Basiseinheit (7-9) verbunden ist.
Figur 3:
   Fig. 3 zeigt die über den nicht sichtbaren Sockel geschobene Dekohülse (16), die sich unterhalb der Leuchtmittelfassung (1) befindet sowie die Lüsterklemmen (14) und (15) und die Zuleitungen bzw. Anschlusskabel (Z4) und (Z5). Es zeigt des Weiteren wie die Dekohülse (16) durch, wie diese jeweils in Fig. 1 ersichtlich sind, die Nut (Z3) und durch die flexiblen Überstände (Z1) und (Z1a) der Rasthaken (5) und (6) fixiert wurde.
Figur 4:

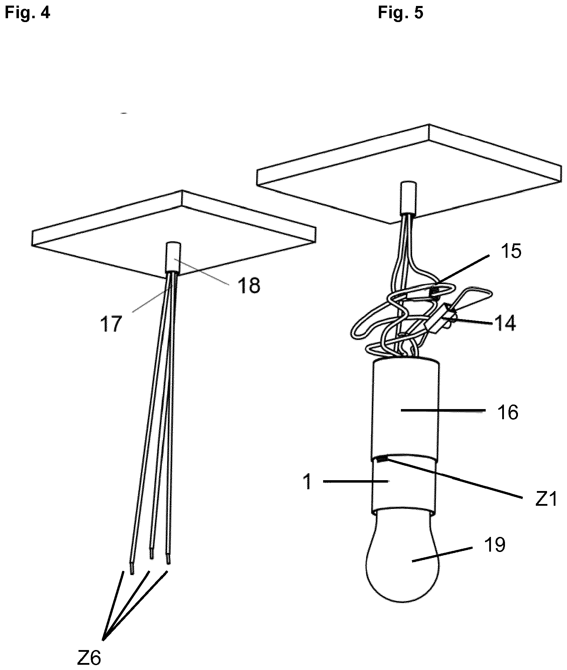

   Fig. 4 zeigt das bauseits aus der Wand oder Decke herausgeführte Lampenkabel mit den elektrischen Anschlussdrähten (17), dem Kabelmantel (18) und den abisolierten Kabelenden (Z6).
Figur 5:
   Fig. 5 zeigt beispielhaft die Verbindung der Baufassung mit den Lüsterklemmen (14) und (15) und eine durch diese provisorische Befestigung der Leuchtmittelfassung (1) und des Sockels (nicht sichtbar) mit der der Dekohülse (16) und dem Leuchtmittel (19). Die Dekohülse (16) ist dabei durch die flexiblen Überstände (Z1) und (Z1a), wobei der Überstand (Z1a) nicht sichtbar ist, gegen ein Herunterrutschen in Richtung Leuchtmittel (19) geschützt.
Figur 6:

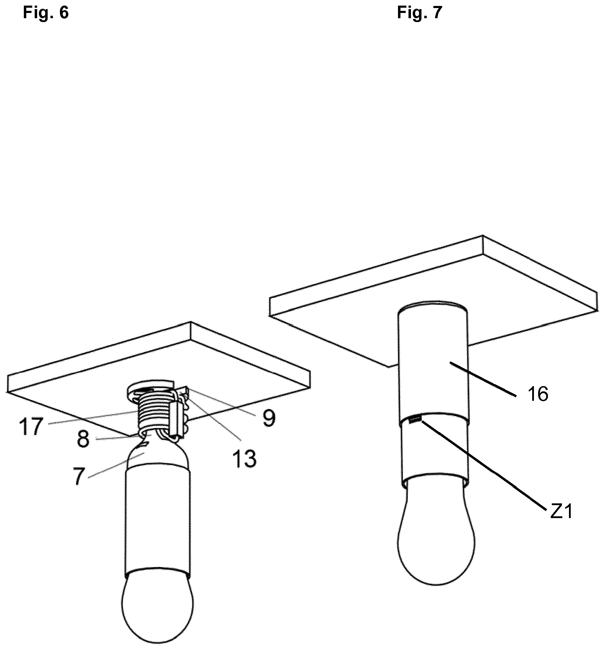

   Fig. 6 demonstriert, wie die Aussparung (13) eines Befestigungsschildes (9) über den Kabelmantel (18), hier nicht sichtbar, des Lampenkabels (siehe auch (18) in Fig. 4) geschoben und gegen die Wand oder Decke verschraubt wurde und wie Anschlussdrähte (17) eng um den Arm (8) am Sockel (7) geschlungen sind.
Figur 7:
   Fig. 7 zeigt, wie weiterhin die Dekohülse (16) alle Anschlüsse verdeckt, wenn sie hochgeschoben und die Leuchte betriebsfertig ist. Auch hier ist die Dekohülse (16) erneut gegen Verrutschen über die flexiblen Überstände (Z1) und (Z1a), wobei hier nur der Überstand (Z1) sichtbar ist, geschützt.
Figur 8:

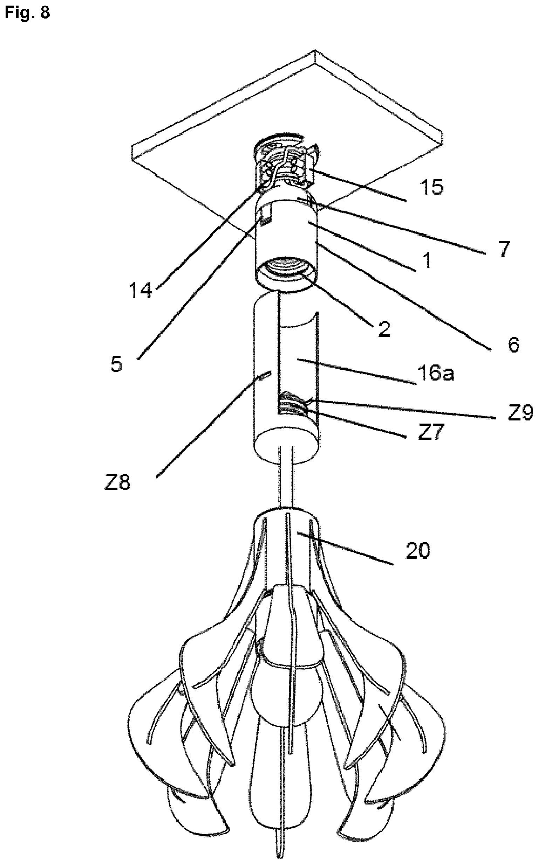

   Fig. 8 demonstriert beispielhaft, wie eine dekorative Leuchte (20), z.B. als eine Wohnzimmerlampe (20) oder Pendelleuchte (20), mit einer gewünscht geformten Dekohülse (16a) die Leuchtmittelfassung (1) und den Sockel (7); der auch als Sockelplatte (7A) ausgeführt werden kann, und die aufgewickelten Kabel mit den Lüsterklemmen (14) und (15) umfasst. Der Gewindesockel (Z7) mit der Dekohülse (16a) wird dabei in das für die Aufnahme des Leuchtmittels vorgesehene Gewinde (2) gedreht, um die Stromversorgung für die Leuchte (20), z.B. als eine Wohnzimmerlampe (20) oder Pendelleuchte (20), zu gewährleisteten, und wie die Dekohülse (16a) durch die Rasthaken (5) und (6), wobei Rasthaken (6) nicht sichtbar ist, in die Rasthakenaufnahmen (Z8) und (Z9) einrastet. Die Rasthakenaufnahmen (Z8) und (Z9) können dabei auch die Funktion einer Zugentlastung aufweisen.
Figur 9:

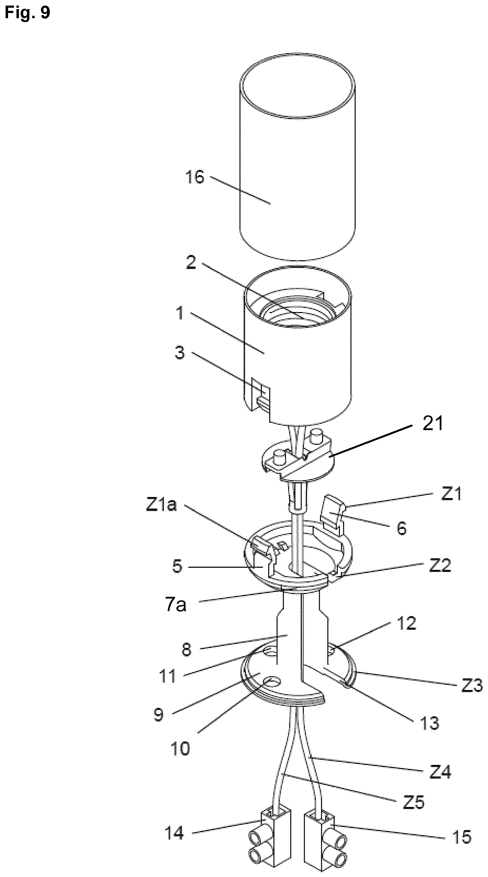

   Fig. 9 zeigt wie Fig. 1 in einer Explosionszeichnung die Fassung (1), auch als Leuchtmittelfassung (1) bezeichnet, mit Ihrem Gewinde (2) für die Leuchtmittel und die Verrastungsöffnung (3), wobei die gegenüberliegende Verrastungsöffnung (4) nicht sichtbar ist, für die Rasthaken (5) und (6) mit Ihren flexiblen Überständen (Z1) und (Z1a). Weiterhin wird in Fig. 9 eine aus einem Sockel (7), der im vorliegenden Fall als eine Sockelplatte (7a) ausgebildet ist, einem Arm (8), der hier tailliert ist, und einem Befestigungsschild (9) gebildete Einheit gezeigt. Die aus Sockel (7), auch als eine Sockelplatte (7a) ausgebildet, aus Arm (8) und Befestigungsschild (9) gebildete Einheit wird im Rahmen dieser Erfindung auch als "Basiseinheit (7-9)" bezeichnet.
   Der Begriff "tailliert" bedeutet hierbei, dass der Arm (8) eine "Taille" aufweist, so dass vorzugsweise ein Arm (8) vorliegt, der im beim Sockel (7) oder bei der Sockelplatte (7a) anschließenden Abschnitt gegenüber dem zum Befestigungsschild (9) anschließenden Abschnitt außen und/oder innen verjüngt ist.
   Die Rasthaken (5) und (6) verbinden die Sockelplatte (7a) mit der Leuchtmittelfassung (1), wobei dann die Basiseinheit (7-9), gebildet aus Sockelplatte (7a) mit seinem Arm (8) zur Distanzhaltung gegenüber dem Befestigungsschild (9) mit seinen Bohrungen (10) bis (12), mit Nut (Z3) und Aussparungen (13) und (Z2), zur Befestigung an einer Wand oder Raumdecke dienen.
   Die einzeln angesetzten Lüsterklemmen (14) und (15) an den Anschlusskabeln (Z4) und (Z5) dienen zum Anschluss an bauseits vorhandene Stromzuführungen. Die Dekohülse (16) kann, auch nach der Montage, über die erfindungsgemäß bevorzugte Baufassung geschoben werden. Die Dekohülse (16) wird dabei durch die flexiblen Überstände (Z1) und (Z1a) der Rasthaken (5) und (6) bzw. durch die Nut (Z3) im Befestigungsschild (9) fixiert.
   Die Dekohülse (16) kann dekorativ ausgeführt und mit einer Schutzfolie ausgestattet sein, die erst nach Abschluss der Malerarbeiten entfernt wird.
Figur 10:

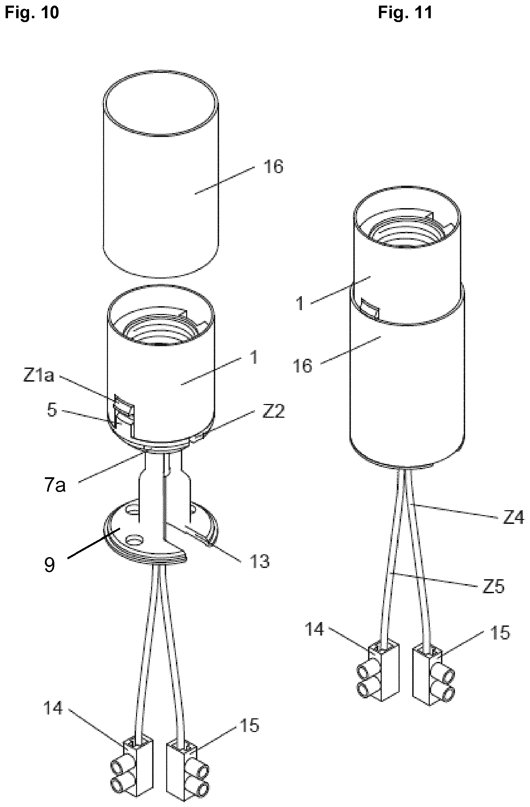

   Fig. 10 zeigt wie in Fig. 2 die Dekohülse (16), die mit dem Sockel (7), der im vorliegenden Fall als eine Sockelplatte (7a) ausgebildet ist, verbundene Leuchtmittelfassung (1), die Lüsterklemmen (14) und (15), den Überstand (Z1a), wobei der gegenüberliegende Überstand (Z1) nicht sichtbar ist, den sichtbaren Teil Ratshaken (5) und die Aussparung (13) im Befestigungsschild (9) und die Aussparung (Z2) in Sockelplatte (7a). Fig. 2 zeigt somit eine Leuchtmittelfassung (1), die über die Rasthaken (5) und (6), wobei Rasthaken (6) hier nicht sichtbar ist, und über die nach Einrasten nicht mehr sichtbaren Verrastungsöffnungen (3) und (4) mit der aus der Sockelplatte (7a), dem Arm (8) und dem Befestigungsschild (9) gebildeten Basiseinheit (7-9) verbunden ist.
Figur 11:
   Fig. 11 zeigt wie Fig. 3 die über den nicht sichtbaren Sockel geschobene Dekohülse (16), die sich unterhalb der Leuchtmittelfassung (1) befindet sowie die Lüsterklemmen (14) und (15) und die Zuleitungen bzw. Anschlusskabel (Z4) und (Z5). Es zeigt des Weiteren wie die Dekohülse (16) durch, wie diese jeweils in Fig. 1 bzw. Fig. 9 ersichtlich sind, die Nut (Z3) und durch die flexiblen Überstände (Z1) und (Z1a) der Rasthaken (5) und (6) fixiert wurde.
Figur 12:

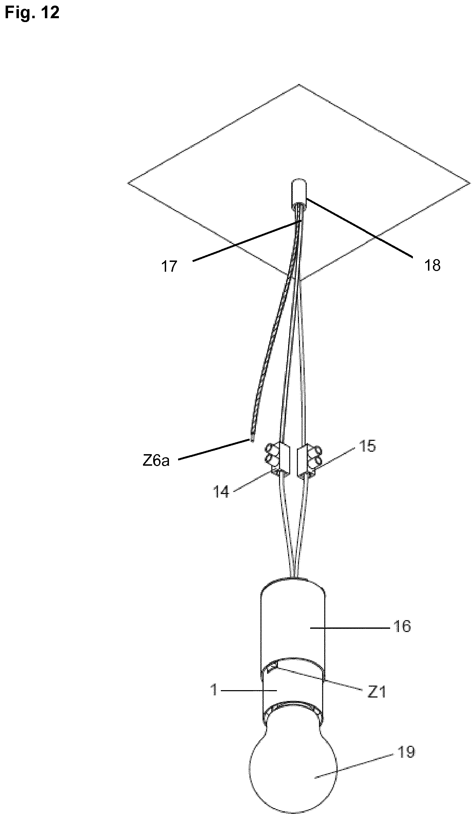

   Fig. 12 zeigt wie in Fig. 4 das bauseits aus der Wand oder Decke herausgeführte Lampenkabel mit den elektrischen Anschlussdrähten (17), dem Kabelmantel (18) und den abisolierten Kabelenden (Z7), wobei (Z6a) das abisoliertes Kabelende der Masseleitung (E) der Anschlussdrähte (17) darstellt, und wobei weiterhin wie in Fig. 5 beispielhaft die Verbindung der Baufassung mit den Lüsterklemmen (14) und (15) und eine durch diese provisorische Befestigung der Leuchtmittelfassung (1) und des Sockels (hier als nicht sichtbare Sockelplatte (7a) ausgeführt) mit der der Dekohülse (16) und dem Leuchtmittel (19) gezeigt ist. Die Dekohülse (16) ist dabei durch die flexiblen Überstände (Z1) und (Z1a), wobei der Überstand (Z1a) nicht sichtbar ist, gegen ein Herunterrutschen in Richtung Leuchtmittel (19) geschützt.
Figur 13:

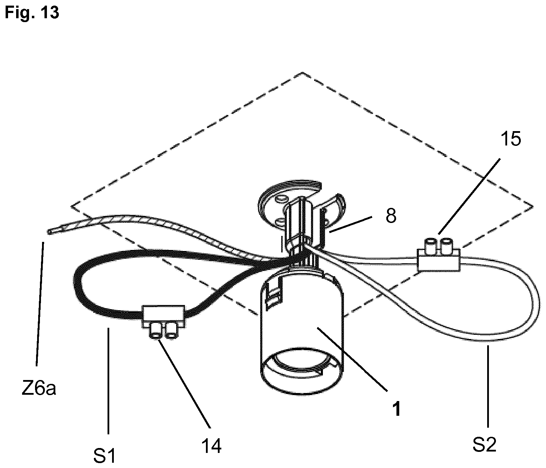

   Fig. 13 demonstriert, wie die elektrischen Anschlussdrähten (17), über die hier nicht mehr sichtbaren abisolierten Kabelenden (Z7) beispielhaft die Verbindung der Baufassung mit den Lüsterklemmen (14) und (15) an die Zuleitungen bzw. Anschlusskabel (Z4) und (Z5) der Leuchtmittelfassung (1) unter Bildung von Schlaufen erfolgt, wobei das abisoliertes Kabelende (Z6a) der Masseleitung (E) der Anschlussdrähte (17) frei bleibt, Die Schlaufen bzw. Kabelschlaufen (S1) und (S2) können nachfolgend um den Arm (8) der Basiseinheit (7-9) geschlungen werden. Die schwarze Schlaufen bzw. Kabelschlaufen (S1) stellt hier den Leiter (L) dar und die weiße Schlaufe bzw. Kabelschlaufe (S2) stellt hier den Leiter (N) dar.
Figur 14:

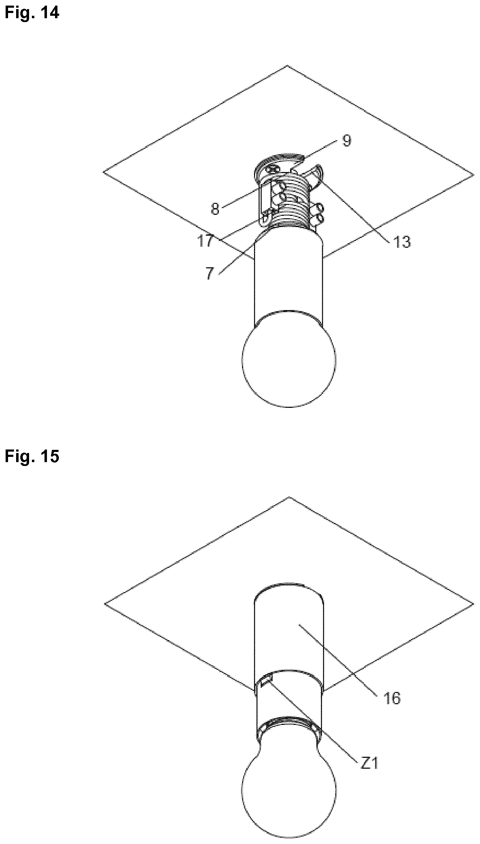

   Fig. 14 demonstriert, wie die Aussparung (13) eines Befestigungsschildes (9) über den hier nicht mehr sichtbaren Kabelmantel (18) geschoben und gegen die Wand oder Decke verschraubt wurde und wie Anschlussdrähte (17) eng um den Arm (8) am Sockel (7), der hier als Sockelplatte (7a) ausgebildet ist, geschlungen sind.
Figur 15:
   Fig. 15 zeigt sodann, wie weiterhin die Dekohülse (16) alle Anschlüsse aus Fig. 14 verdeckt, wenn sie hochgeschoben und die Leuchte betriebsfertig ist. Auch hier ist die Dekohülse (16) erneut gegen Verrutschen über die flexiblen Überstände (Z1) und (Z1a), wobei hier nur der Überstand (Z1) sichtbar ist, geschützt.
Figur 16:

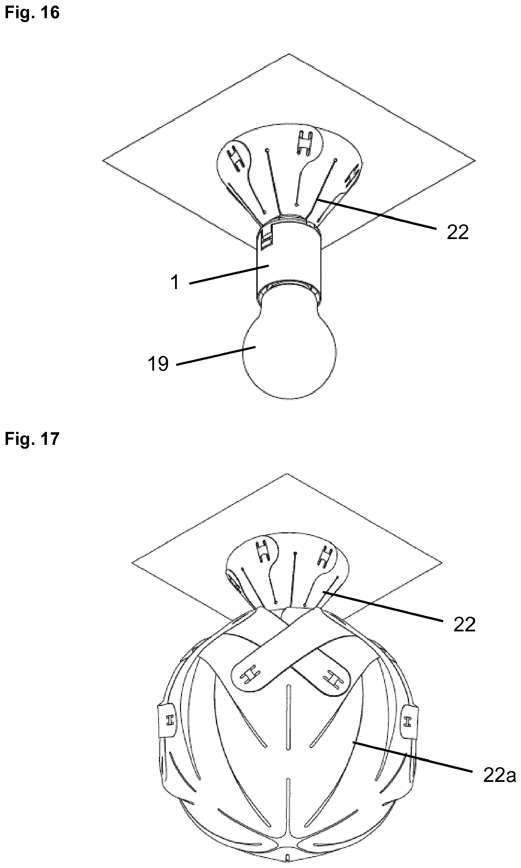

   Fig. 16 zeigt eine Alternative zur Dekohülse (16) alle Anschlüsse aus Fig. 14 und Fig 15, die als Baldachin (22) (Lampen-Baldachin, z.B. einer Button Loop Lamp, z.B. wie diese in der deutschen Patentanmeldung DE 10 2017 130863.6 mit Anmeldetag vom 21. Dezember 2017 sowie auch im eingetragenen EU-Geschmacksmuster EU 004541969-001-0014 (Eintragungsdatum 11. Dezember 2017 beschrieben ist) ausgeführt ist, und wobei durch den Baldachin (22) hier in Fig. 16 alle Anschlüsse aus Fig. 14 verdeckt sind, wenn der zwischen Decke oder Wand (oder ggf. alternativ die fakultativ zusätzliche Decken- oder Wandabdeckung (23) mit gegenüber dem Befestigungsschild (9) größerer Abdeckfläche; sog. "Hide") einerseits und der Sockelplatte (7a) andererseits fixierte Baldachin (22) und die Leuchte betriebsfertig ist und gegen Verrutschen geschützt ist.
Figur 17:
   Fig. 17 zeigt sodann beispielhaft, wie die Baufassung der Fig. 16 mit Baldachin (22) mit einer dekorativen Lampenschirm (22a), z.B. einer Button Loop Lamp, z.B. wie diese in der deutschen Patentanmeldung DE 10 2017 130863.6 mit Anmeldetag vom 21. Dezember 2017 sowie auch im eingetragenen EU-Geschmacksmuster EU 004541969-001-0014 (Eintragungsdatum 11. Dezember 2017 beschrieben ist, ausgestattet ist.
Figur 18:

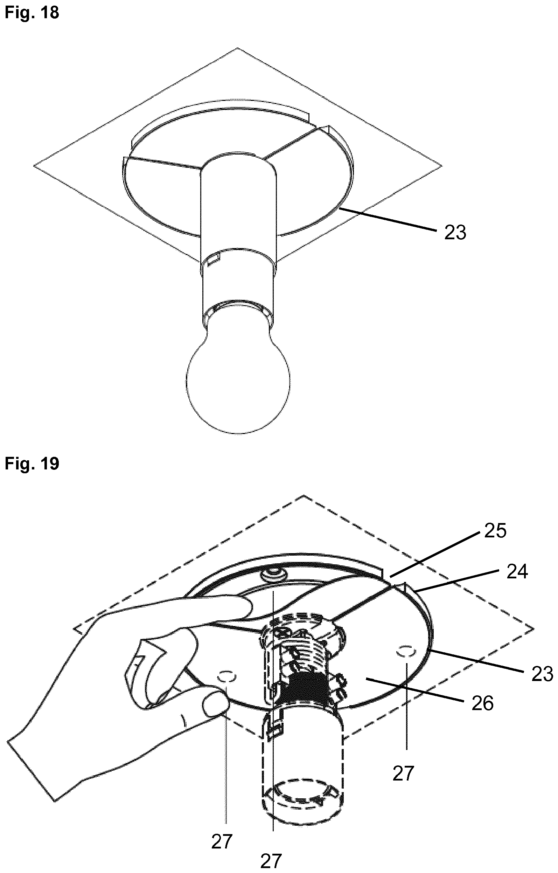

   Fig. 18 demonstriert beispielhaft, ein Decken- oder Wand-montiertes Kit aus einer erfindungsgemäß bevorzugten Baufassung, wobei das montierte Kit zusätzlich zur Baufassung oder zur Basiseinheit eine zusätzliche Decken- oder Wandabdeckung (23) umfasst, wobei die zusätzliche Decken- oder Wandabdeckung (23) plan mit einer Decke oder Wand abschließt und wobei die zusätzliche Decken- oder Wandabdeckung (23) eine gegenüber dem Befestigungsschild (9), das hier nicht mehr sichtbar ist, größere Abdeckfläche aufweist.
   Die zusätzliche Decken- oder Wandabdeckung (23) kommt bevorzugt zur Anwendung, wenn aus der Decke oder Wand nicht nur der Kabelmantel (18) hervortritt, sondern die Decke oder Wand um den Kabelmantel (18) eine größere Öffnung aufweist, die durch eine erfindungsgemäß bevorzugte Baufassung allein nicht abgedeckt bzw. kaschiert und/oder verschraubt werden kann.
Figuren 19 und 20:

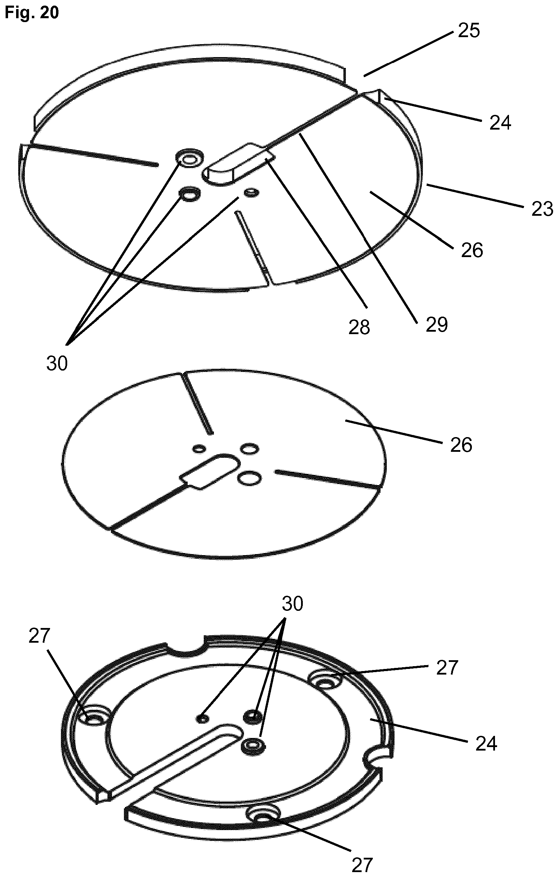

   Fig. 19 und 20 demonstrieren beispielhaft den Aufbau einer fakultativ zusätzlichen Decken- oder Wandabdeckung (23) mit gegenüber dem Befestigungsschild (9) größerer Abdeckfläche (sog. "Hide") zur Anbringung an die Decke oder Wand und zur Befestigung der erfindungsgemäß bevorzugten Baufassung über das Befestigungsschild am Sockel (7) oder der Sockelplatte (7a). In Fig. 19 sind hierbei die flexiblen Eigenschaften der Abdeckplatte (26) der Decken- oder Wandabdeckung (23) gezeigt.
   Die Decken- oder Wandabdeckung (23) weist eine Decken- oder Wandplatte (24) zur Anbringung an die Decke oder Wand und zur Befestigung der erfindungsgemäß bevorzugten Baufassung über das Befestigungsschild am Sockel (7) oder der Sockelplatte (7a) und eine flexible Abdeckplatte (26), insbesondere zum Aufstecken auf die Decken- oder Wandplatte (24), auf. Weiterhin weist die Decken- oder Wandplatte (24) der zusätzlichen Decken- oder Wandabdeckung (23) eine Aussparung (25) auf, und es sind Bohrungen (27) in der Decken- oder Wandplatte (24) zur Decken- oder Wandbefestigung der Decken- oder Wandplatte (24) vorhanden.
   Die flexible Abdeckplatte (26) weist eine mittlere Aussparung und einen Schlitz (28) in der Abdeckplatte (26) auf, wobei sich der Schlitz (28) vom Rand der Abdeckplatte (26) zur mittleren Aussparung (28) in der Abdeckplatte (26) erstreckt.
   Weiterhin sind Bohrungen (30) in der Decken- oder Wandplatte (24) und in der Abdeckplatte (26); vorzugsweise mit unterschiedlichen Durchmessern, vorhanden, die zur Befestigung des Befestigungsschilds (9), z.B. mittels Schrauben und Kontermuttern, an der zusätzlichen Decken- oder Wandabdeckung (23) dienen.

### DETAILLIERTE BESCHREIBUNG DER ERFINDUNGSGEMÄßEN LÖSUNG

Die Erfindung betrifft eine weiter unten genauer beschriebene Basiseinheit für eine Baufassung, die plan mit einer Decke oder Wand abschließt und zur provisorischen oder permanenten Befestigung von Beleuchtungskörpern dient, umfassend:
- eine Leuchtmittelfassung (1),
- wenigstens zwei Zuleitungen (Z4, Z5), die an die Leuchtmittelfassung (1) anschließbar oder angeschlossen sind und wobei an jedes Ende der wenigstens zwei Zuleitungen (Z4, Z5) einzelne Kabelklemmen (14, 15) anschließbar oder angeschlossen sind,
- eine durch Aufstecken mit der Leuchtmittelfassung (1) verbindbare oder verbundene Basiseinheit (7-9),
wobei die Basiseinheit (7-9) so ausgestaltet ist, dass wenigstens zwei bauseitig vorhandene Anschlussdrähte (17), nachdem diese Anschlussdrähte (17) über die einzelnen Kabelklemmen (14, 15) an die wenigstens zwei Zuleitungen (Z4, Z5) angeschlossen sind, insbesondere eng, um die Basiseinheit (7-9), vorzugsweise um einen gegenüber den Außenmaßen verjüngten Teil der Basiseinheit (7-9), geschlungen werden können.

Die Erfindung kann in einer bevorzugten Ausführungsform auch eine Baufassung betreffen, die plan mit einer Decke oder Wand abschließt und zur provisorischen oder permanenten Befestigung von Beleuchtungskörpern dient, umfassend:
- eine Leuchtmittelfassung (1),
- wenigstens zwei Zuleitungen (Z4, Z5), die an die Leuchtmittelfassung (1) anschließbar oder angeschlossen sind und wobei an jedes Ende der wenigstens zwei Zuleitungen (Z4, Z5) einzelne Kabelklemmen (14, 15) anschließbar oder angeschlossen sind,
- eine durch Aufstecken mit der Leuchtmittelfassung (1) verbindbare oder verbundene Basiseinheit (7-9),
wobei die Basiseinheit (7-9) so ausgestaltet ist, dass wenigstens zwei bauseitig vorhandene Anschlussdrähte (17), nachdem diese Anschlussdrähte (17) über die einzelnen Kabelklemmen (14, 15) an die wenigstens zwei Zuleitungen (Z4, Z5) angeschlossen sind, so eng um einen Teil der Basiseinheit (7-9) geschlungen werden können, dass die miteinander verbundenen wenigstens zwei Anschlussdrähte (17), wenigstens zwei Zuleitungen (Z4, Z5) und einzelnen Kabelklemmen (14, 15) vollständig innerhalb des äußeren Umfangs der Basiseinheit (7-9) liegen.

Der Begriff "geschlungen" bzw. "umschlungen", "Schlaufe" und dergleichen bedeutet, dass keine Wicklung im eigentlichen Sinne, also kein Wicklung mit Eigenschaften einer Spule, vorliegt, sondern wie beispielsweise in Fig. 13 demonstriert, die Umschlingung der Basiseinheit (7-9) durch die elektrischen Anschlussdrähte (17), die über abisolierte Kabelende (Z7) die Verbindung der Baufassung mit den Lüsterklemmen (14) und (15) an die Zuleitungen bzw. Anschlusskabel (Z4) und (Z5) der Leuchtmittelfassung (1) unter Bildung von Schlaufen bewirken, erfolgt, wobei das abisoliertes Kabelende (Z6a) der Masseleitung (E) der Anschlussdrähte (17) frei bleibt. Die Schlaufen sowie die Masseleitung können nachfolgend einzeln um den Arm (8) der Basiseinheit (7-9) geschlungen werden, so dass eine Umschlingung ohne Eigenschaften einer Spule entsteht. Erfindungsgemäß ist es daher von Bedeutung, dass die Anschlussdrähte (17) einzeln, also nicht mehr vom Kabelmantel (18), mit Ausnahme der aus der Decke oder Wand austretenden ersten zwei Zentimeter, ummantelt sind. Vorzugsweise weist Kabelmantel (18) somit eine Länge von etwa bis zu maximal zwei Zentimetern auf und die einzelnen Anschlussdrähte (17) eine Länge von etwa bis zu maximal 20 Zentimetern.

Die Erfindung betrifft somit bevorzugt eine Baufassung, die, beispielsweise nach Montage, plan mit einer Decke oder Wand abschließt und zur provisorischen oder permanenten Befestigung von Beleuchtungskörpern dient, umfassend eine mit einer Leuchtmittelfassung (1) verbundene Basiseinheit (7-9) und bauseitige Anschlussdrähte (17), die mittels einzelner Kabelklemmen (14, 15) an Zuleitungen (Z4, Z5) zur Leuchtmittelfassung (1) angeschlossen sind, wobei die Anschlussdrähte (17), insbesondere eng, um die Basiseinheit (7-9) geschlungen sind.

Der Begriff "Kabelklemme" ist synonym zum Begriff "Kabelverbinder" und bezeichnet im Rahmen der Erfindung ein Befestigungsmittel zum, insbesondere sicheren und fixierenden, Anschluss eines elektrischen Anschlusskabels bzw. Zuleitung, d.h. beispielsweise über abisolierte Kabelenden (Z6) der Anschlussdrähte (17), an bauseits vorhandene Stromzuführungen. Der Anschluss kann hierbei z.B. insbesondere durch Klemm-, Steck-, Klemmsteck- , Schraubklemm-, Steckschraubverbindungen bewerkstelligt werden. Geeignete Kabelklemmen sind dem Fachmann bekannt, wie beispielsweise Klemmverbinder und/oder Lüsterklemmen.

Anschlussdrähte, d.h. im Rahmen der vorliegenden Erfindung elektrische Anschlussdrähte, dienen zum Anlegen von Strom an das Leuchtmittel, stellen also elektrische Leitungen dar. Elektrische Leitungen bestehen aus metallischen elektrischen Leitern, in der Regel in Form von Drähten oder Litzen, insbesondere z.B. aus Kupfer oder Aluminium, sowie deren isolierender Umhüllung. Sind mehrere gegeneinander isolierte Leiter (Adern) zusammengefasst, werden sie als Leitung bezeichnet. Die einzelnen Adern werden z.B. Neutralleitung, Außenleitung, Erdungsleitung bezeichnet. Üblicherweise sind die Anschlussdrähte somit die einzelnen, mit einem Isolator umhüllten Leitungsadern eines elektrischen Kabels. Als Kabel wird in der Elektrotechnik allgemein ein mit Isolierstoffen ummantelter ein- oder mehradriger Verbund von Adern (Einzelleitungen) bezeichnet, welcher der Übertragung von Energie (Strom) dient. Als Isolierstoffe kommen üblicherweise unterschiedliche Kunststoffe zur Anwendung, welche die als Leiter genutzten Adern umgeben und gegeneinander isolieren. Die Zahl der Strom führenden Leiter, auch Adern genannt, im Kabel ist die Leiteranzahl oder Aderzahl. Bei mehradrigen Kabeln ist immer jede einzelne Ader von einem eigenen Isolator, der Aderisolierung bzw. Drahtisolierung, umhüllt, während eine äußere Umhüllung, der Kabelmantel, alle Adern umgibt.

Im Rahmen der Erfindung sind wenigstens jeweils zwei Zuleitungen (Z4, Z5) für den Anschluss an wenigstens zwei bauseitig vorhandene elektrische Anschlussdrähte (17) vorgesehen. Es kann im Rahmen der Erfindung auch vorgesehen sein, dass drei Zuleitungen (Z4, Z5, E) für den Anschluss an drei bauseitig vorhandene elektrische Anschlussdrähte (17) vorhanden sind, für den Fall dass die bauseitig vorgesehenen elektrische Anschlussdrähte (17) auch eine Erdungsleitung (E), die auch als Masseleitung bezeichnet wird, umfassen. Die Masseleitung bzw. der Masseanschluss dient üblicherweise als elektrische Schutzmaßnahme bei Vorhandensein von elektrisch leitfähigen Gehäuseteilen und berührbaren Teilen bei elektrischen Einrichtungen mit gefährlichen Spannungen, z.B. indem die elektrisch leitenden Gehäuseteile und berührbaren Teile solcher elektrischer Einrichtungen mit Schutzleitern miteinander und der Erde (das Schutzleiternetz der Elektroinstallation oder ein Erder) verbunden sind. Sind die Gehäuseteile und berührbaren Teile der elektrischen Einrichtung aus Kunststoff kann die Masseleitung bzw. die Erdungsleitung (E) entfallen, so dass dann im Rahmen der Erfindung vorgesehen sein kann, dass lediglich zwei Zuleitungen (Z4, Z5) für den Anschluss an zwei bauseitig vorhandene elektrische Anschlussdrähte (17) vorhanden sind, und wobei dann die Masseleitung bzw. Erdungsleitung (E) frei bleibt, d.h. nicht an die Baufassung angeschlossen ist. Die erfindungsgemäß bevorzugte Baufassung kann so ausgestaltet werden, dass sie zwei bis zu fünf Anschlussdrähte, z.B. eines zwei bis zu 5-adrigen Kabels, aufnehmen kann.

Der Begriff "Basiseinheit (7-9)" bezeichnet im Rahmen der Erfindung eine aus einem Sockel (7), einem Arm (8) und einem Befestigungsschild (9) gebildete Einheit. Das Befestigungsschild (9) dient hierbei insbesondere als Wand- oder Deckenhalter, oder kann wie bereits beschrieben auch als Zugentlastung dienen.

Die Erfindung betrifft eine Basiseinheit für eine plan mit einer Decke oder Wand abschließende und zur provisorischen oder permanenten Befestigung von Beleuchtungskörpern dienende Baufassung, wobei die Baufassung eine Leuchtmittelfassung (1) und wenigstens zwei Zuleitungen (Z4, Z5), die an die Leuchtmittelfassung (1) anschließbar oder angeschlossen sind und wobei an jedes Ende der wenigstens zwei Zuleitungen (Z4, Z5) einzelne Kabelklemmen (14, 15) anschließbar oder angeschlossen sind, umfasst,
wobei die Basiseinheit eine aus einem Sockel (7), Arm (8) und Befestigungsschild (9) gebildete Basiseinheit (7-9) darstellt,
wobei die Basiseinheit zum Verbinden mit einer Leuchtmittelfassung (1) durch Aufstecken auf die Basiseinheit (7-9) ausgestaltet ist, und
wobei die Basiseinheit (7-9) so ausgestaltet ist, dass nach dem durch Aufstecken der Leuchtmittelfassung (1) auf die Basiseinheit (7-9) wenigstens zwei bauseitig vorhandene Anschlussdrähte (17), nachdem diese Anschlussdrähte (17) über die einzelnen Kabelklemmen (14, 15) an die wenigstens zwei Zuleitungen (Z4, Z5) angeschlossen sind, eng um die Basiseinheit (7-9), vorzugsweise um einen gegenüber den Außenmaßen verjüngten Teil der Basiseinheit (7-9), geschlungen werden können.

In einer bevorzugten Ausführung kann es vorgesehen sein, dass die erfindungsgemäß bevorzugte Baufassung oder die erfindungsgemäße Basiseinheit, dadurch gekennzeichnet ist, dass die Basiseinheit (7-9) im Sockel (7) eine Aussparung (Z2) und im Befestigungsschild (9) eine Aussparung (13) aufweist.

In einer bevorzugten Ausführung kann es vorgesehen sein, dass die erfindungsgemäß bevorzugte Baufassung oder die erfindungsgemäße Basiseinheit, dadurch gekennzeichnet ist, dass die Basiseinheit (7-9) im Arm (8) eine Aussparung (Z2a) aufweist, vorzugsweise wobei die zur Aussparung (Z2) im Sockel (7) und zur Aussparung (13) im Befestigungsschild (9) korrespondiert, weiter bevorzugt wobei die Aussparung (Z2a) im Arm (8) einen zur Aussparung (Z2a) hin offenen Innenraum im Arm (8) bildet, besonders bevorzugt wobei der genannte offene Innenraum im Arm (8) auch zum Sockel (7) und zum Befestigungsschild (9) hin offen ausgestaltet ist.

In einer bevorzugten Ausführung kann es vorgesehen sein, dass die erfindungsgemäß bevorzugte Baufassung oder 3 bis 4 oder die erfindungsgemäße Basiseinheit, dadurch gekennzeichnet ist, dass in der Basiseinheit (7-9) der Sockel (7) als Sockelplatte (7a) ausgeführt ist.

In einer bevorzugten Ausführung kann es vorgesehen sein, dass die erfindungsgemäß bevorzugte Baufassung oder die erfindungsgemäße Basiseinheit, dadurch gekennzeichnet ist, dass die Basiseinheit (7-9) einen Arm (8) aufweist, der im beim Sockel (7) oder bei der Sockelplatte (7a) anschließenden Abschnitt gegenüber dem zum Befestigungsschild (9) anschließenden Abschnitt außen und/oder innen verjüngt ist.

In einer bevorzugten Ausführung kann es vorgesehen sein, dass die erfindungsgemäß bevorzugte Baufassung oder die erfindungsgemäße Basiseinheit, dadurch gekennzeichnet ist, dass die Basiseinheit (7-9) am Sockel (7) oder der Sockelplatte (7a) flexible Rasthaken (5, 6) mit Überständen (Z1, Z1a) aufweist, vorzugsweise wobei an den flexiblen Rasthaken (5, 6) die Überstände (Z1, Z1a) an der Oberseite zu einer beiden Seiten abgeschrägt sind, und/oder dass die Basiseinheit (7-9) am Befestigungsschild (9) eine Nut (Z3) aufweist.

Eine bevorzugte Baufassung oder Basiseinheit, dadurch gekennzeichnet, dass die Basiseinheit (7-9) eine aus einem Sockel (7) oder Sockelplatte (7a), einem Arm (8) und einem Befestigungsschild (9) gebildete Einheit bildet, vorzugsweise wobei das Befestigungsschild (9) als Wand- oder Deckenhalter dient, weiter bevorzugt wobei der Befestigungsschild (9) Bohrungen (10-12) zur Decken- oder Wandbefestigung aufweist.

Eine bevorzugte Baufassung kann dadurch gekennzeichnet sein, dass die Basiseinheit (7-9) eine aus einem Sockel (7), einem Arm (8) und einem Befestigungsschild (9) gebildete Einheit bildet, vorzugsweise wobei das Befestigungsschild (9) als Wand- oder Deckenhalter dient, weiter bevorzugt wobei der Befestigungsschild (9) Bohrungen (10-12) zur Decken- oder Wandbefestigung aufweist.

Eine bevorzugte Baufassung kann vorzugsweise dadurch gekennzeichnet sein, dass die Basiseinheit (7-9) im Sockel (7) eine Aussparung (Z2) und im Befestigungsschild (9) eine Aussparung (13) aufweist.

In einer bevorzugten Ausführung kann es vorgesehen sein, dass die erfindungsgemäß bevorzugte Baufassung oder die erfindungsgemäße Basiseinheit, dadurch gekennzeichnet ist, dass eine Dekohülse (16) oder ein Baldachin (22), über die Basiseinheit (7-9) und Anschlüsse der Baufassung so aufsteckbar oder aufgesteckt ist, dass durch die Dekohülse (16) die Anschlüsse, die durch die Anschlussdrähte (17), die Kabelklemmen (14, 15) sowie die Zuleitungen (Z4, Z5) gebildet werden, durch die Dekohülse (16) oder den Baldachin (22) kaschiert werden können oder kaschiert sind.

In einer Ausgestaltung umfasst die erfindungsgemäß bevorzugte Baufassung eine Dekohülse (16) über die Baufassung und über Anschlüsse gesteckt ist, die durch die Anschlussdrähte (17), die Kabelklemmen (14, 15) sowie die Zuleitungen (Z4, Z5) gebildet werden und diese kaschiert. Diese Baufassung ist dadurch gekennzeichnet, dass eine Dekohülse (16) über die Basiseinheit (7-9) und Anschlüsse der Baufassung so aufsteckbar oder aufgesteckt ist, dass durch die Dekohülse (16) die Anschlüsse, die durch die Anschlussdrähte (17), die Kabelklemmen (14, 15) sowie die Zuleitungen (Z4, Z5) gebildet werden, durch die Dekohülse (16) kaschiert werden können oder kaschiert sind.

In einer bevorzugten Ausführung kann es vorgesehen sein, dass die bevorzugte erfindungsgemäße Baufassung oder die erfindungsgemäße Basiseinheit, dadurch gekennzeichnet ist, dass die Leuchtmittelfassung (1) über die Basiseinheit (7-9) mit einem Befestigungsschild (9), das vorzugsweise als Wand- oder Deckenhalter (9) dient, verbindbar oder verbunden ist, wobei vorzugsweise die Leuchtmittelfassung (1) in die Basiseinheit (7-9), weiter bevorzugt in den Sockel (7) oder Sockelplatte (7a) der Basiseinheit (7-9), eingerastet werden kann oder eingerastet ist.

In einer weiteren Ausgestaltung zeichnet sich die bevorzugte erfindungsgemäße Baufassung dadurch aus, dass die Leuchtmittelfassung (1) mit einem Wand- oder Deckenhalter (9) verbunden ist, in den diese eingerastet werden kann. Diese Baufassung ist dadurch gekennzeichnet, dass die Leuchtmittelfassung (1) über die Basiseinheit (7-9) mit einem Befestigungsschild (9), das vorzugsweise als Wand- oder Deckenhalter (9) dient, verbindbar oder verbunden ist, wobei vorzugsweise die Leuchtmittelfassung (1) in die die Basiseinheit (7-9), weiter bevorzugt in den Sockel (7) der Basiseinheit (7-9), eingerastet werden kann oder eingerastet ist.

Bevorzugt betrifft die Erfindung eine bevorzugte Baufassung wie vorangehend beschrieben, die dadurch gekennzeichnet ist, dass die Basiseinheit (7-9) am Sockel (7) flexible Rasthaken (5, 6) aufweist, vorzugsweise wobei die flexiblen Rasthaken (5, 6) Überstände (Z1, Z1a) aufweisen, und/oder dass die Basiseinheit (7-9) am Befestigungsschild (9) eine Nut (Z3) aufweist.

In einer bevorzugten Ausführung kann es vorgesehen sein, dass die bevorzugte erfindungsgemäße Baufassung oder die erfindungsgemäße Basiseinheit, dadurch gekennzeichnet, dass ihre Basiseinheit (7-9) aus einem Sockel (7) oder Sockelplatte (7a), Armen (8) und einem Befestigungsschild (9) besteht, wobei der Sockel (7) oder Sockelplatte (7a) eine Aussparung (Z2) und flexible Rasthaken (5, 6) zur Verbindung mit Verrastungsöffnungen (3, 4) der Leuchtmittelfassung (1) aufweist, und/oder der Befestigungsschild (9) Bohrungen (10-12) zur Decken- oder Wandbefestigung und eine Aussparung (13) aufweist.

Weiterhin betrifft die Erfindung bevorzugt eine Baufassung, die dadurch gekennzeichnet ist, dass ihre Basiseinheit (7-9) aus einem Sockel (7), Armen (8) und einem Befestigungsschild (9) besteht, wobei der Sockel (7) eine Aussparung (Z2) und Rasthaken (5, 6) zur Verbindung mit Verrastungsöffnungen (3, 4) der Leuchtmittelfassung (1) aufweist sowie der Befestigungsschild (9) Bohrungen (10-12) zur Decken- oder Wandbefestigung und eine Aussparung (13) aufweist.

In einer bevorzugten Ausführung kann es vorgesehen sein, dass die bevorzugte erfindungsgemäße Baufassung (wie z.B. in Anspruch 7 oder 11 angegeben), dadurch gekennzeichnet ist, dass die flexiblen Rasthaken (5, 6) Überstände (Z1, Z1a) und/oder das Befestigungsschild (9) eine Nut (Z3) aufweisen, welche jeweils einzeln oder gemeinsam die Dekohülse (16) fixieren, oder bei einem Baldachin (22) (Lampen-Baldachin, z.B. einer Button Loop Lamp, z.B. wie diese in der deutschen Patentanmeldung DE 10 2017 130863.6 mit Anmeldetag vom 21. Dezember 2017 sowie auch im eingetragenen EU-Geschmacksmuster EU 004541969-001-0014 (Eintragungsdatum 11. Dezember 2017 beschrieben ist) der Baldachin (22) zwischen Decke oder Wand (oder ggf. alternativ die fakultativ zusätzliche Decken-oder Wandabdeckung (23) mit gegenüber dem Befestigungsschild (9) größerer Abdeckfläche; sog. "Hide") einerseits und der Sockelplatte (7a) andererseits fixiert und gegen Verrutschen geschützt ist.

Ferner betrifft die Erfindung bevorzugt eine bevorzugte Baufassung, die dadurch gekennzeichnet ist, dass die Rasthaken (5, 6) Überstände (Z1, Z1a) und das Befestigungsschild (9) eine Nut (Z3) aufweisen, welche die Dekohülse (16) fixieren.

Die beschriebene erfindungsgemäß bevorzugte Baufassung oder die beschriebene erfindungsgemäße Basiseinheit kann bevorzugt dadurch gekennzeichnet sein, dass ein definierter Abstand zwischen der Decke oder Wand und dem davon entfernten Ende der Baufassung oder des Leuchtmittels eingehalten ist.

Die beschriebene erfindungsgemäß bevorzugte Baufassung oder 3 bis 13 oder die beschriebene erfindungsgemäße Basiseinheit mit Leuchtmittelfassung (1) kann dadurch gekennzeichnet sein, dass ein Gewindesockel mit Dekohülse (Z7, 16a) als Verbindung für dekorative Leuchten darin eingeschraubt werden kann.

Die vorstehend beschriebene erfindungsgemäß bevorzugte Baufassung kann bevorzugt weiterhin dadurch gekennzeichnet sein, dass ein Gewindesockel mit Dekohülse (Z7, 16a) als Verbindung für dekorative Leuchten darin eingeschraubt werden kann.

Die Erfindung betrifft auch ein Kit aus einer erfindungsgemäß als bevorzugt beschriebenen Baufassung oder einer erfindungsgemäß beschriebenen Basiseinheit, das dadurch gekennzeichnet ist, dass das Kit zusätzlich zur Baufassung oder zur Basiseinheit eine zusätzliche Decken- oder Wandabdeckung (23, "Hide") umfasst, wobei die zusätzliche Decken- oder Wandabdeckung (23) plan mit einer Decke oder Wand abschließt und wobei die zusätzliche Decken- oder Wandabdeckung (23) eine gegenüber dem Befestigungsschild (9) größere Abdeckfläche aufweist.

Ein beispielhafter Aufbau einer fakultativ zusätzlichen Decken- oder Wandabdeckung (23) mit gegenüber dem Befestigungsschild (9) größerer Abdeckfläche (sog. "Hide") zur Anbringung an die Decke oder Wand und zur Befestigung der erfindungsgemäß bevorzugten Baufassung über das Befestigungsschild am Sockel (7) oder der Sockelplatte (7a) ist in Fig. 18 und Fig. 19 beschrieben, wobei in Fig. 19 die flexiblen Eigenschaften der Abdeckplatte (26) gezeigt sind.

Die Decken- oder Wandabdeckung (23) weist in einer Ausführungsform eine Decken- oder Wandplatte (24) zur Anbringung an die Decke oder Wand und zur Befestigung der erfindungsgemäß bevorzugten Baufassung über das Befestigungsschild am Sockel (7) oder der Sockelplatte (7a) und eine flexible Abdeckplatte (26), insbesondere zum Aufstecken auf die Decken- oder Wandplatte (24), auf. Weiterhin weist die Decken- oder Wandplatte (24) der zusätzlichen Decken- oder Wandabdeckung (23) in einer Ausführungsform eine Aussparung (25) auf, und es sind Bohrungen (27) in der Decken- oder Wandplatte (24) zur Decken- oder Wandbefestigung der Decken- oder Wandplatte (24) vorhanden.

Die flexible Abdeckplatte (26) weist in einer Ausführungsform eine mittlere Aussparung und einen Schlitz (28) in der Abdeckplatte (26) auf, wobei sich der Schlitz (28) vom Rand der Abdeckplatte (26) zur mittleren Aussparung (28) in der Abdeckplatte (26) erstreckt. Die Decken- oder Wandabdeckung (23) kann also auch nachträglich über eine Baufassung geschoben werden.

Weiterhin sind in einer Ausführungsform Bohrungen (30) in der Decken- oder Wandplatte (24) und ggf. in der Abdeckplatte (26); vorzugsweise mit unterschiedlichen Durchmessern, vorhanden, die zur Befestigung des Befestigungsschilds (9), z.B. mittels Schrauben und Kontermuttern, an der zusätzlichen Decken- oder Wandabdeckung (23) dienen. Liegen Bohrungen (30) in der Decken- oder Wandplatte (24) und ggf. in der Abdeckplatte (26) mit unterschiedlichen Durchmessern vor, wie in den Figuren 19 und 20 gezeigt, können diese quasi als Schablone für die Korrekte Befestigung der des Befestigungsschildes (9) dienen.

### BEZUGSZEICHENLISTE:

### Nr. Bezeichnung

- 1: Leuchtmittelfassung
- 2: Gewinde für die Aufnahme von Leuchtmittel
- 3, 4: Verrastungsöffnungen (4 nicht sichtbar)
- 5, 6: Rasthaken
- 7, 7a: Sockel (7), ggf. als Sockelplatte (7a) ausgeführt
- 8: Arm zur Distanzhaltung zwischen Sockel (7) und Befestigungsschild (9)
- 9: Befestigungsschild am Arm (8) des Sockels (7) bzw. der Sockelplatte (7a)
- 7-9: Basiseinheit, aus Sockel (7), Arm (8) und Befestigungsschild (9) gebildete Einheit
- 10, 11, 12: Bohrungen im Befestigungsschild (9)
- 13: Aussparung im Befestigungsschild (9)
- 14, 15: Kabelklemmen, z.B. Klemmverbinder, z.B. Lüsterklemmen
- 16, 16a: Dekohülse,16a Dekohülse mit Gewindesockel
- 17: Anschlussdrähte (des Lampenkabels)
- 18: Kabelmantel (des Lampenkabels)
- 19: Leuchtmittel, z.B. Glühbirne etc.; alternativ ggf. auch als "Lampe"
- 20: Wohnzimmerlampe, ggf. auch als Pendelleuchte ausgeführt
- 21: Zugentlastung (Entlastung von Zuleitungen, z.B. Z4 und Z5)
- 22: Baldachin (Lampen-Baldachin, z.B. einer Button Loop Lamp)
- 22a: dekorativer Lampenschirm (22a), z.B. einer Button Loop Lamp
- 23: fakultativ zusätzliche Decken- oder Wandabdeckung mit gegenüber dem Befestigungsschild (9) größerer Abdeckfläche (sog. "Hide") zur Anbringung an die Decke oder Wand und zur Befestigung der erfindungsgemäß bevorzugten Baufassung über das Befestigungsschild am Sockel (7) oder der Sockelplatte (7a)
- 24: Decken- oder Wandplatte derzusätzlichen Decken- oder Wandabdeckung (23) zur Anbringung an die Decke oder Wand und zur Befestigung der erfindungsgemäß bevorzugten Baufassung über das Befestigungsschild am Sockel (7) oder der Sockelplatte (7a)
- 25: Aussparung in der Decken- oder Wandplatte (24) der zusätzlichen Decken- oder Wandabdeckung (23)
- 26: flexible Abdeckplatte der zusätzlichen Decken- oder Wandabdeckung (23), insbesondere zum Aufstecken auf die Decken- oder Wandplatte (24)
- 27: Bohrungen in der Decken- oder Wandplatte (24) zur Decken- oder Wandbefestigung der Deckenplatte (24)
- 28: mittlere Aussparung in der Abdeckplatte (26)
- 29: Schlitz in der Abdeckplatte (26), vom Rand der Abdeckplatte (26) zur mittlere Aussparung (28) in der Abdeckplatte (26)
- 30: Bohrungen in der Decken- oder Wandplatte (24) und in der Abdeckplatte (26); vorzugsweise mit unterschiedlichen Durchmessern, die zur Befestigung des Befestigungsschilds (9), z.B. mittels Schrauben und Kontermuttern, an der zusätzlichen Decken- oder Wandabdeckung (23) dienen

- E: Erdungsleitung
- S1, S2: Schlaufen bzw. Kabelschlaufen
- Z1, Z1a: (flexible) Überstände an Rasthaken 5, 6 (dienen zur Fixierung)
- Z2: Aussparung im Sockel (7)
- Z2a: Aussparung im Arm (8)
- Z3: Nut im Befestigungsschild (9) (dient zur Fixierung)
- Z4, Z5: Anschlusskabel bzw. Zuleitungen (zum Anschluss an bauseits vorhandene Stromzuführungen)
- Z6: abisolierte Kabelenden der Anschlussdrähte (17)
- Z6a: abisoliertes Kabelende der Masseleitung (E) der Anschlussdrähte (17)
- Z7: Gewindesockel
- Z8, Z9: Rasthakenaufnahmen

## Patentansprüche

1. Basiseinheit für eine plan mit einer Decke oder Wand abschließende und zur provisorischen oder permanenten Befestigung von Beleuchtungskörpern dienende Baufassung, **dadurch gekennzeichnet, dass**
die Basiseinheit eine aus einem Sockel (7), Arm (8) und Befestigungsschild (9) gebildete Basiseinheit (7-9) darstellt,
wobei die Basiseinheit zum Verbinden mit einer Leuchtmittelfassung (1) durch Aufstecken auf die Basiseinheit (7-9) ausgestaltet ist, und
wobei die Basiseinheit (7-9) so ausgestaltet ist, dass nach dem durch Aufstecken der Leuchtmittelfassung (1) auf die Basiseinheit (7-9) wenigstens zwei bauseitig vorhandene Anschlussdrähte (17), nachdem diese Anschlussdrähte (17) über die einzelnen Kabelklemmen (14, 15) an die wenigstens zwei Zuleitungen (Z4, Z5) angeschlossen sind, eng um die Basiseinheit (7-9), vorzugsweise um einen gegenüber den Außenmaßen verjüngten Teil der Basiseinheit (7-9), geschlungen werden können.

2. Baufassung, die plan mit einer Decke oder Wand abschließt und zur provisorischen oder permanenten Befestigung von Beleuchtungskörpern dient, umfassend:
- eine Leuchtmittelfassung (1),
- wenigstens zwei Zuleitungen (Z4, Z5), die an die Leuchtmittelfassung (1) anschließbar oder angeschlossen sind und wobei an jedes Ende der wenigstens zwei Zuleitungen (Z4, Z5) einzelne Kabelklemmen (14, 15) anschließbar oder angeschlossen sind,
- eine durch Aufstecken mit der Leuchtmittelfassung (1) verbindbare oder verbundene Basiseinheit (7-9) nach Anspruch 1.

3. Basiseinheit nach Anspruch 1 oder Baufassung nach Anspruch 2, **dadurch gekennzeichnet, dass** die Basiseinheit (7-9) im Sockel (7) eine Aussparung (Z2) und im Befestigungsschild (9) eine Aussparung (13) aufweist.

4. Basiseinheit nach Anspruch 1 oder 3 oder Baufassung nach Anspruch 2 oder 3, **dadurch gekennzeichnet, dass** die Basiseinheit (7-9) im Arm (8) eine Aussparung (Z2a) aufweist, vorzugsweise wobei die zur Aussparung (Z2) im Sockel (7) und zur Aussparung (13) im Befestigungsschild (9) korrespondiert, weiter bevorzugt wobei die Aussparung (Z2a) im Arm (8) einen zur Aussparung (Z2a) hin offenen Innenraum im Arm (8) bildet, besonders bevorzugt wobei der genannte offene Innenraum im Arm (8) auch zum Sockel (7) und zum Befestigungsschild (9) hin offen ausgestaltet ist.

5. Basiseinheit nach einem der Ansprüche 1 oder 3 bis 4 oder Baufassung nach einem der Ansprüche 2 bis 4, **dadurch gekennzeichnet, dass** in der Basiseinheit (7-9) der Sockel (7) als Sockelplatte (7a) ausgeführt ist.

6. Basiseinheit nach einem der Ansprüche 1 oder 3 bis 5 oder Baufassung nach einem der Ansprüche 2 bis 5, **dadurch gekennzeichnet, dass** die Basiseinheit (7-9) einen Arm (8) aufweist, der im zum Sockel (7) oder zur Sockelplatte (7a) zugewandten Abschnitt gegenüber dem zum Befestigungsschild (9) zugewandten Abschnitt außenseitig verjüngt ist.

7. Basiseinheit nach einem der Ansprüche 1 oder 3 bis 6 oder Baufassung nach einem der Ansprüche 2 bis 6, **dadurch gekennzeichnet, dass** die Basiseinheit (7-9) am Sockel (7) oder der Sockelplatte (7a) flexible Rasthaken (5, 6) mit Überständen (Z1, Z1a) aufweist, vorzugsweise wobei an den flexiblen Rasthaken (5, 6) die Überstände (Z1, Z1a) an der Oberseite zu einer oder beiden Seiten abgeschrägt sind, und/oder dass die Basiseinheit (7-9) am Befestigungsschild (9) eine Nut (Z3) aufweist.

8. Basiseinheit nach einem der Ansprüche 1 oder 3 bis 7 oder Baufassung nach einem der Ansprüche 2 bis 7, **dadurch gekennzeichnet, dass** die Basiseinheit (7-9) eine aus einem Sockel (7) oder Sockelplatte (7a), einem Arm (8) und einem Befestigungsschild (9) gebildete Einheit bildet, vorzugsweise wobei das Befestigungsschild (9) als Wand- oder Deckenhalter dient, weiter bevorzugt wobei der Befestigungsschild (9) Bohrungen (10-12) zur Decken- oder Wandbefestigung aufweist.

9. Basiseinheit nach einem der Ansprüche 1 oder 3 bis 8 oder Baufassung nach einem der Ansprüche 2 bis 8, **dadurch gekennzeichnet, dass** eine Dekohülse (16) oder ein Baldachin (22), über die Basiseinheit (7-9) und Anschlüsse der Baufassung so aufsteckbar oder aufgesteckt ist, dass durch die Dekohülse (16) die Anschlüsse, die durch die Anschlussdrähte (17), die Kabelklemmen (14, 15) sowie die Zuleitungen (Z4, Z5) gebildet werden, durch die Dekohülse (16) oder den Baldachin (22) kaschiert werden können oder kaschiert sind.

10. Basiseinheit nach einem der Ansprüche 1 oder 3 bis 9 oder Baufassung nach einem der Ansprüche 2 bis 9, **dadurch gekennzeichnet, dass** die Leuchtmittelfassung (1) über die Basiseinheit (7-9) mit einem Befestigungsschild (9), das vorzugsweise als Wand- oder Deckenhalter (9) dient, verbindbar oder verbunden ist, wobei vorzugsweise die Leuchtmittelfassung (1) in die Basiseinheit (7-9), weiter bevorzugt in den Sockel (7) oder Sockelplatte (7a) der Basiseinheit (7-9), eingerastet werden kann oder eingerastet ist.

11. Basiseinheit nach einem der Ansprüche 1 oder 3 bis 10 oder Baufassung nach einem der Ansprüche 2 bis 10, **dadurch gekennzeichnet, dass** ihre Basiseinheit (7-9) aus einem Sockel (7) oder Sockelplatte (7a), Armen (8) und einem Befestigungsschild (9) besteht, wobei der Sockel (7) oder Sockelplatte (7a) eine Aussparung (Z2) und flexible Rasthaken (5, 6) zur Verbindung mit Verrastungsöffnungen (3, 4) der Leuchtmittelfassung (1) aufweist, und/oder der Befestigungsschild (9) Bohrungen (10-12) zur Decken- oder Wandbefestigung und eine Aussparung (13) aufweist.

12. Baufassung nach Anspruch 7 oder 11, **dadurch gekennzeichnet, dass** die flexiblen Rasthaken (5, 6) Überstände (Z1, Z1a) und/oder das Befestigungsschild (9) eine Nut (Z3) aufweisen, welche jeweils einzeln oder gemeinsam die Dekohülse (16) fixieren, oder bei einem Baldachin (22) der Baldachin (22) zwischen Decke oder Wand (oder ggf. alternativ die fakultativ zusätzliche Decken- oder Wandabdeckung (23) mit gegenüber dem Befestigungsschild (9) größerer Abdeckfläche; sog. "Hide") einerseits und der Sockelplatte (7a) andererseits fixiert und gegen Verrutschen geschützt ist.

13. Basiseinheit nach einem der Ansprüche 1 oder 3 bis 12 oder Baufassung nach einem der Ansprüche 2 bis 12, **dadurch gekennzeichnet, dass** ein definierter Abstand zwischen der Decke oder Wand und dem davon entfernten Ende der Baufassung oder des Leuchtmittels eingehalten ist.

14. Basiseinehit nach einem der Ansprüche 1 oder 3 bis 13 oder Baufassung nach einem der Ansprüche 2 bis 13 mit Leuchtmittelfassung (1), **dadurch gekennzeichnet, dass** ein Gewindesockel mit Dekohülse (Z7, 16a) als Verbindung für dekorative Leuchten darin eingeschraubt werden kann.

15. Kit aus einer Basiseinheit nach einem der Ansprüche 1 oder 3 bis 13 oder Baufassung nach einem der Ansprüche 2 bis 13, **dadurch gekennzeichnet, dass** das Kit zusätzlich zur Baufassung oder zur Basiseinheit eine zusätzliche Decken- oder Wandabdeckung (23) umfasst, wobei die zusätzliche Decken- oder Wandabdeckung (23) plan mit einer Decke oder Wand abschließt und wobei die zusätzliche Decken-oder Wandabdeckung (23) eine gegenüber dem Befestigungsschild (9) größere Abdeckfläche aufweist.

## Claims

1. Base unit for a structural holder which is mounted flush with a ceiling or wall and serves for the temporary or permanent fastening of light fittings, **characterized in that**
the base unit is a base unit (7-9) formed from a base (7), an arm (8) and a fastening shield (9),
wherein the base unit is configured for connecting to an illuminant holder (1) by plugging same onto the base unit (7-9), and
wherein the base unit (7-9) is configured in such a manner that at least two connection wires (17) present on site after by the illuminant holder (1) being plugged onto the base unit (7-9), after said connection wires (17) are attached to the at least two supply lines (Z4, Z5) via the individual cable clamps (14, 15), can be looped tightly around the base unit (7-9), preferably around a part of the base unit (7-9) that is tapered in relation to the external dimensions.

2. Structural holder which is mounted flush with a ceiling or wall and serves for the temporary or permanent fastening of light fittings, comprising:
- an illuminant holder (1),
- at least two supply lines (Z4, Z5) which can be attached or are attached to the illuminant holder (1) and wherein individual cable clamps (14, 15) can be attached or are attached to each end of the at least two supply lines (Z4, Z5),
- a base unit (7-9) according to Claim 1 which can be connected or is connected to the illuminant holder (1) by being plugged thereon.

3. Base unit according to Claim 1 or structural holder according to Claim 2, **characterized in that** the base unit (7-9) has a cutout (Z2) in the base (7) and a cutout (13) in the fastening shield (9).

4. Base unit according to Claim 1 or 3 or structural holder according to Claim 2 or 3, **characterized in that** the base unit (7-9) has a cutout (Z2a) in the arm (8), preferably wherein said cutout corresponds to the cutout (Z2) in the base (7) and to the cutout (13) in the fastening shield (9), furthermore preferably wherein the cutout (Z2a) in the arm (8) forms an interior space in the arm (8), said interior space being open toward the cutout (Z2a), particularly preferably wherein said open interior space in the arm (8) is also open toward the base (7) and toward the fastening shield (9).

5. Base unit according to one of Claims 1 or 3 to 4 or structural holder according to one of Claims 2 to 4, **characterized in that** the base (7) in the base unit (7-9) is designed as a base plate (7a).

6. Base unit according to one of Claims 1 or 3 to 5 or structural holder according to one of Claims 2 to 5, **characterized in that** the base unit (7-9) has an arm (8) which, in the portion facing the base (7) or the base plate (7a), is tapered on the outer side in relation to the portion facing the fastening shield (9).

7. Base unit according to one of Claims 1 or 3 to 6 or structural holder according to one of Claims 2 to 6, **characterized in that**, on the base (7) or the base plate (7a), the base unit (7-9) has flexible latching hooks (5, 6) with excess lengths (Z1, Z1a), preferably wherein the excess lengths (Z1, Z1a) on the flexible latching hooks (5, 6) are beveled on the upper side to one or both sides, and/or **in that** the base unit (7-9) has a groove (Z3) on the fastening shield (9).

8. Base unit according to one of Claims 1 or 3 to 7 or structural holder according to one of Claims 2 to 7, **characterized in that** the base unit (7-9) forms a unit formed from a base (7) or base plate (7a), an arm (8) and a fastening shield (9), preferably wherein the fastening shield (9) serves as a wall holder or ceiling holder, furthermore preferably wherein the fastening shield (9) has bores (10-12) for the ceiling or wall fastening.

9. Base unit according to one of Claims 1 or 3 to 8 or structural holder according to one of Claims 2 to 8, **characterized in that** a decorative sleeve (16) or a canopy (22) can be plugged or is plugged over the base unit (7-9) and connections of the structural holder in such a manner that, by means of the decorative sleeve (16), the connections, which are formed by the connection wires (17), the cable clamps (14, 15) and the supply lines (Z4, Z5), can be concealed or are concealed by the decorative sleeve (16) or the canopy (22).

10. Base unit according to one of Claims 1 or 3 to 9 or structural holder according to one of Claims 2 to 9, **characterized in that** the illuminant holder (1) can be connected or is connected via the base unit (7-9) to a fastening shield (9) which preferably serves as a wall holder or ceiling holder (9), wherein preferably the illuminant holder (1) can be latched or is latched into the base unit (7-9), furthermore preferably into the base (7) or base plate (7a) of the base unit (7-9).

11. Base unit according to one of Claims 1 or 3 to 10 or structural holder according to one of Claims 2 to 10, **characterized in that** the base unit (7-9) of said structural holder consists of a base (7) or base plate (7a), arms (8) and a fastening shield (9), wherein the base (7) or base plate (7a) has a cutout (Z2) and flexible latching hooks (5, 6) for connecting to latching openings (3, 4) of the illuminant holder (1), and/or the fastening shield (9) has bores (10-12) for the ceiling fastening or wall fastening, and a cutout (13).

12. Structural holder according to Claim 7 or 11, **characterized in that** the flexible latching hooks (5, 6) have excess lengths (Z1, Z1a) and/or the fastening shield (9) has a groove (Z3), which excess lengths and/or groove in each case individually or jointly fix the decorative sleeve (16), or, in the case of a canopy (22), the canopy (22) is fixed between the ceiling or wall (or optionally alternatively the optionally additional ceiling covering or wall covering (23) having a larger covering surface than the fastening shield (9); what is referred to as a hide), on the one hand, and the base plate (7a), on the other hand, and is protected against slipping.

13. Base unit according to one of Claims 1 or 3 to 12 or structural holder according to one of Claims 2 to 12, **characterized in that** a defined distance is maintained between the ceiling or wall and that end of the structural holder or of the illuminant that is remote therefrom.

14. Base unit according to one of Claims 1 or 3 to 13 or structural holder according to one of Claims 2 to 13 with an illuminant holder (1), **characterized in that** a threaded base with a decorative sleeve (Z7, 16a) as a connection for decorative luminaires can be screwed into said structural holder.

15. Kit consisting of a base unit according to one of Claims 1 or 3 to 13 or of a structural holder according to one of Claims 2 to 13, **characterized in that**, in addition to the structural holder or to the base unit, the kit comprises an additional ceiling covering or wall covering (23), wherein the additional ceiling covering or wall covering (23) is mounted flush with a ceiling or wall, and wherein the additional ceiling covering or wall covering (23) has a covering surface which is larger than the fastening shield (9).

## Revendications

1. Unité de base pour une douille provisoire se terminant de manière plane avec un plafond ou un mur et servant à la fixation provisoire ou permanente de corps d'éclairage, **caractérisée en ce que**
l'unité de base constitue une unité de base (7-9) formée à partir d'un socle (7), d'un bras (8) et d'une flasque de fixation (9),
dans laquelle l'unité de base est configurée pour être reliée à une douille pour moyen luminescent (1) par emboîtement sur l'unité de base (7-9), et
dans laquelle l'unité de base (7-9) est configurée de telle sorte que du fait de l'emboîtement de la douille pour moyen luminescent (1) sur l'unité de base (7-9), au moins deux fils métalliques de raccordement (17) présents côté chantier peuvent être enroulés étroitement autour de l'unité de base (7-9), de préférence autour d'une partie, rétrécie par rapport aux dimensions extérieures, de l'unité de base (7-9) après que lesdits fils métalliques de raccordement (17) sont raccordés par l'intermédiaire des serre-câbles (14, 15) individuels aux au moins deux lignes d'alimentation (Z4, Z5).

2. Douille provisoire, qui se termine de manière plane avec un plafond ou un mur et sert à la fixation provisoire ou permanente de corps d'éclairage, comprenant :
- une douille pour moyen luminescent (1),
- au moins deux lignes d'alimentation (Z4, Z5), qui peuvent être raccordées ou sont raccordées à la douille pour moyen luminescent (1) et dans laquelle divers serre-câbles (14, 15) peuvent être raccordés ou sont raccordés à chaque extrémité des au moins deux lignes d'alimentation (Z4, Z5),
- une unité de base (7-9) selon la revendication 1 pouvant être reliée ou reliée par emboîtement à la douille pour moyen luminescent (1).

3. Unité de base selon la revendication 1 ou douille provisoire selon la revendication 2, **caractérisée en ce que** l'unité de base (7-9) présente dans le socle (7) un évidement (Z2) et dans la flasque de fixation (9) un évidement (13).

4. Unité de base selon la revendication 1 ou 3 ou douille provisoire selon la revendication 2 ou 3, **caractérisée en ce que** l'unité de base (7-9) présente dans le bras (8) un évidement (Z2a), de préférence qui correspond à l'évidement (Z2) dans le socle (7) et à l'évidement (13) dans la flasque de fixation (9), de manière davantage préférée dans laquelle l'évidement (Z2a) forme dans le bras (8) un espace intérieur, ouvert en direction de l'évidement (Z2a), dans le bras (8), de manière particulièrement préférée dans laquelle ledit espace intérieur ouvert est configuré dans le bras (8) également de manière ouverte en direction du socle (7) et en direction de la flasque de fixation (9).

5. Unité de base selon l'une quelconque des revendications 1 ou 3 à 4 ou douille provisoire selon l'une quelconque des revendications 2 à 4, **caractérisée en ce que** le socle (7) est réalisé en tant que plaque de socle (7a) dans l'unité de base (7-9).

6. Unité de base selon l'une quelconque des revendications 1 ou 3 à 5 ou douille provisoire selon l'une quelconque des revendications 2 à 5, **caractérisée en ce que** l'unité de base (7-9) présente un bras (8), qui est rétréci côté extérieur dans la section tournée vers le socle (7) ou vers la plaque de socle (7a) par rapport à la section tournée vers la flasque de fixation (9) .

7. Unité de base selon l'une quelconque des revendications 1 ou 3 à 6 ou douille provisoire selon l'une quelconque des revendications 2 à 6, **caractérisée en ce que** l'unité de base (7-9) présente sur le socle (7) ou sur la plaque de socle (7a) des crochets d'enclenchement (5, 6) flexibles avec des débords (Z1, Z1a), de préférence dans laquelle les débords (Z1, Z1a) sont chanfreinés sur le côté supérieur en direction d'un ou des deux côtés sur les crochets d'enclenchement (5, 6) flexibles, et/ou que l'unité de base (7-9) présente sur la flasque de fixation (9) une rainure (Z3).

8. Unité de base selon l'une quelconque des revendications 1 ou 3 à 7 ou douille provisoire selon l'une quelconque des revendications 2 à 7, **caractérisée en ce que** l'unité de base (7-9) forme une unité formée à partir d'un socle (7) ou d'une plaque de socle (7a), d'un bras (8) et d'une flasque de fixation (9), de préférence dans laquelle la flasque de fixation (9) fait office de support de mur ou de plafond, de manière davantage préférée dans laquelle la flasque de fixation (9) présente des alésages (10-12) pour la fixation de plafond ou de mur.

9. Unité de base selon l'une quelconque des revendications 1 ou 3 à 8 ou douille provisoire selon l'une quelconque des revendications 2 à 8, **caractérisée en ce qu'**un manchon décoratif (16) ou un baldaquin (22) peut être emboîté ou est emboîté par-dessus l'unité de base (7-9) et des raccords de la douille provisoire de telle sorte que les raccords sont formés par le manchon décoratif (16), les serre-câbles (14, 15) ainsi que les lignes d'alimentation (Z4, Z5) sont formées par les fils métalliques de raccordement (17), peuvent être doublés ou sont doublés par le manchon décoratif (16) ou le baldaquin (22).

10. Unité de base selon l'une quelconque des revendications 1 ou 3 à 9 ou douille provisoire selon l'une quelconque des revendications 2 à 9, **caractérisée en ce que** la douille pour moyen luminescent (1) est reliée ou peut être reliée par l'intermédiaire de l'unité de base (7-9) à une flasque de fixation (9), qui fait office de préférence de support de mur ou de plafond (9), dans laquelle de préférence la douille pour moyen luminescent (1) peut être enclenchée ou est enclenchée dans l'unité de base (7-9), de manière davantage préférée dans le socle (7) ou la plaque de socle (7a) de l'unité de base (7-9).

11. Unité de base selon l'une quelconque des revendications 1 ou 3 à 10 ou douille provisoire selon l'une quelconque des revendications 2 à 10, **caractérisée en ce que** leur unité de base (7-9) est constituée d'un socle (7) ou d'une plaque de socle (7a), de bras (8) et d'une flasque de fixation (9), dans laquelle le socle (7) ou la plaque de socle (7a) présente un évidement (Z2) et des crochets d'enclenchement (5, 6) flexibles pour la liaison à des ouvertures d'enclenchement (3, 4) de la douille pour moyen luminescent (1), et/ou la flasque de fixation (9) présente des alésages (10-12) pour la fixation au plafond ou au mur et un évidement (13).

12. Douille provisoire selon la revendication 7 ou 11, **caractérisée en ce que** les crochets d'enclenchement (5, 6) flexibles présentent des débords (Z1, Z1a) et/ou la flasque de fixation (9) présente une rainure (Z3), lesquels bloquent respectivement individuellement ou conjointement le manchon décoratif (16) ou dans le cas d'un baldaquin (22), le baldaquin (22) est bloqué entre le plafond ou le mur (ou éventuellement en variante le recouvrement de plafond ou de mur (23) supplémentaire facultativement par rapport à la flasque de fixation (9) de surface de recouvrement plus grande, ce qu'on appelle « Hide ») d'une part et la plaque de socle (7a) d'autre part et est protégé contre tout glissement.

13. Unité de base selon l'une quelconque des revendications 1 ou 3 à 12 ou douille provisoire selon l'une quelconque des revendications 2 à 12, **caractérisée en ce qu'**une distance définie est maintenue entre le plafond ou le mur et l'extrémité, éloignée de celui-ci, de la douille provisoire ou du moyen luminescent.

14. Unité de base selon l'une quelconque des revendications 1 ou 3 à 13 ou douille provisoire selon l'une quelconque des revendications 2 à 13 avec une douille pour moyen luminescent (1), **caractérisée en ce qu'**un socle fileté avec un manchon décoratif (Z7, 16a) peut y être vissé en tant que liaison pour des ampoules décoratives.

15. Ensemble composé d'une unité de base selon l'une quelconque des revendications 1 ou 3 à 13 ou douille provisoire selon l'une quelconque des revendications 2 à 13, **caractérisé en ce que** l'ensemble comprend en plus de la douille provisoire ou de l'unité de base un recouvrement de plafond ou de mur (23) supplémentaire, dans lequel le recouvrement de plafond ou de mur (23) supplémentaire se termine de manière plane avec un plafond ou un mur et dans lequel le recouvrement de plafond ou mur (23) supplémentaire présente une surface de recouvrement plus grande par rapport à la flasque de fixation (9).
